# EUROPÄISCHE PATENTANMELDUNG

(11) **EP 2 096 516 A2**
(43) Veröffentlichungstag der Anmeldung: **02.09.2009**
(21) Anmeldenummer: 09002626.1
(22) Anmeldetag: 25.02.2009
(51) Int. Cl.: G06F 1/16

(54) **Dockingstation mit einem Schnellverschluss für ein mobiles elektronisches Gerät**

(30) Priorität: 26.02.2008 EP 08003457; 26.02.2008 EP 08003450; 26.03.2008 EP 08005596; 26.03.2008 EP 08005595
(71) Anmelder: ads-tec GmbH, 70771 Leinfelden-Echterdingen (DE)
(72) Erfinder: Speidel, Thomas, 71706 Markgröningen (DE); Schrader, Jens, 70184 Stuttgart (DE)
(74) Vertreter: Wasmuth, Rolf

(57) **Zusammenfassung**

Die Erfindung betrifft einen mobilen Computer wie z. B. ein Notebook oder ein Tablett-PC. In dem Gehäuse (2) des Computers ist eine Hauptplatine (3) angeordnet, auf der mindestens ein Prozessor und ein Arbeitsspeicher vorgesehen sind. Ferner sind eine Anzeigeeinheit (4), eine Eingabeeinheit (5) sowie gehäusefeste Anschlüsse (44) zum elektrischen Verbinden des Gerätes (1) mit einer Dockingstation (50) vorhanden. Nach der Erfindung ist zwischen dem Gerät (1) und der Dockingstation (50) ein einziger mechanischer Schnellverschluss (14) angeordnet, der in eine Wand (12) des Gehäuses (2) eingreift und eine mechanisch feste Verbindung zwischen dem Gehäuse (2) des mobilen Gerätes (1) und der Dockingstation (50) herstellt.

## Beschreibung

Die Erfindung betrifft ein mobiles elektronisches Gerät wie einen Computer, insbesondere ein Notebook, einen Laptop, einen Tablett-PC oder dgl., nach dem Oberbegriff des Anspruchs 1.

Mobile elektronische Geräte sind ihrem bevorzugten Einsatz entsprechend ausgebildet und werden durch eingebaute oder auswechselbare Akkus mit Energie versorgt. Jedem mobilen elektronischen Gerät ist meist eine Dockingstation zugeordnet, die oft als Ladestation dient und darüber hinaus zusätzliche Anschlüsse für weitere Peripheriegeräte bereitstellt. Wird eine Dockingstation mit einem eingesetzten mobilen Gerät als Arbeitsplatz genutzt, muss eine zuverlässige mechanische Verbindung zwischen dem mobilen Gerät und der Dockingstation gewährleistet sein.

Der Erfindung liegt die Aufgabe zugrunde, ein mobiles elektronisches Gerät auf einfache Weise mechanisch fest und doch leicht lösbar mit einer Dockingstation zu verbinden.

Die Aufgabe wird nach den kennzeichnenden Merkmalen des Anspruchs 1 gelöst.

Der in eine Wand des Gehäuses eingreifende mechanische Schnellverschluss gewährleistet eine mechanisch feste Verbindung zwischen dem Gehäuse des Gerätes und der Dockingstation selbst und ermöglicht dem Benutzer aufgrund der Schnellverschlusstechnik ein leichtes Lösen des Gerätes von der Dockingstation im Falle eines mobilen Einsatzes.

Bevorzugt wird das Gerät mit nur einem Schnellverschluss mechanisch fest an der Dockingstation gehalten.

Die mechanisch feste Verbindung wird insbesondere auf der Rückseite des Gerätes, etwa zentral in dessen Bodenplatte und bevorzugt benachbart zu einem elektrischen Anschluss vorgesehen, so dass der elektrische Anschluss sicher verbunden und mechanisch von Tragkräften weitgehend freigehalten ist.

Der Schnellverschluss arbeitet mit einer Riegelplatte zusammen, die am Gehäuse des mobilen elektronischen Gerätes, vorzugsweise im Inneren des Gehäuses festgelegt ist. Zweckmäßig ist die Riegelplatte in einem Riegelblock gehalten, der auf der Hauptplatine fixiert sein kann. Zur Ableitung mechanischer Tragkräfte wird der Riegelblock bevorzugt fest mit dem Gehäuse des Gerätes verbunden. Zweckmäßig wird der Riegelblock mit der Bodenplatte des Gehäuses verschraubt, wobei der elektrische Anschluss von dem Riegelblock umgeben ist. Zweckmäßig liegt der elektrische Anschluss innerhalb der Kontur von Befestigungspunkten des Riegelblocks.

Um eine Abdichtung des Gehäuseinnenraums nach außen zu gewährleisten, wird zwischen den Stirnseiten des Riegelblocks und dem Gehäuse vorzugsweise je eine Dichtung angeordnet. In besonderer Ausgestaltung kann eine fingerhutartige Dichtung in die Öffnung des Gehäuses eingesetzt werden, die den einragenden Teil des Schnellverschlusses umgibt und mit einem Dichtrand an der Wand mit der Öffnung anliegt. Der Gehäuseinnenraum ist so trotz der Öffnung für den Schnellverschluss nach außen sicher abgedichtet.

In Weiterbildung der Erfindung ist die mechanisch feste Verbindung zwischen dem Gehäuse des mobilen Gerätes und der Dockingstation bzw. dessen Tragarm durch ein mechanisches Schloss gesichert ist. Zweckmäßig wirkt das Schloss mit dem mechanischen Schnellverschluss zusammen und ist insbesondere als elektromagnetisch betätigtes Schloss ausgebildet, das in Abhängigkeit vom Ausgangssignal eines Lesegerätes für einen RFID-Tag, eine SMART-Card oder dgl. aktiviert wird.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist.

Es zeigen:
- Fig. 1: eine perspektivische Ansicht eines mobiles elektronischen Geräts in Form eines Tablett-PCs,
- Fig. 2: eine Ansicht auf die obere Längskante des elektronischen Gerätes nach Fig. 1,
- Fig. 3: einen Schnitt durch eine mechanische Haltevorrichtung des Tablett-PCs längs einer Linie III-III in Fig. 2,
- Fig. 4: einen perspektivischen Schnitt durch einen Schnellverschluss gemäß Fig. 3,
- Fig. 5: eine Draufsicht auf einen Riegelblock mit Riegelplatte,
- Fig. 6: in schematischer Darstellung die Halterung des mobilen Gerätes an einer Dockingstation,
- Fig. 7: in perspektivischer Darstellung ein konstruktives Ausführungsbeispiel einer Dockingstation,
- Fig. 8: einen schematischen Schnitt durch einen Tragarm der Dockingstation nach Figur 7.

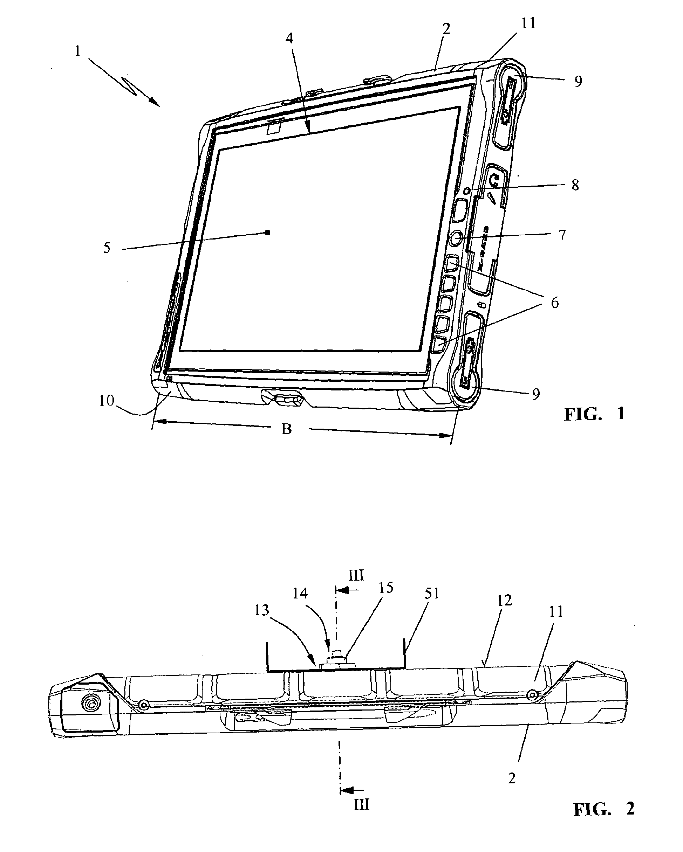

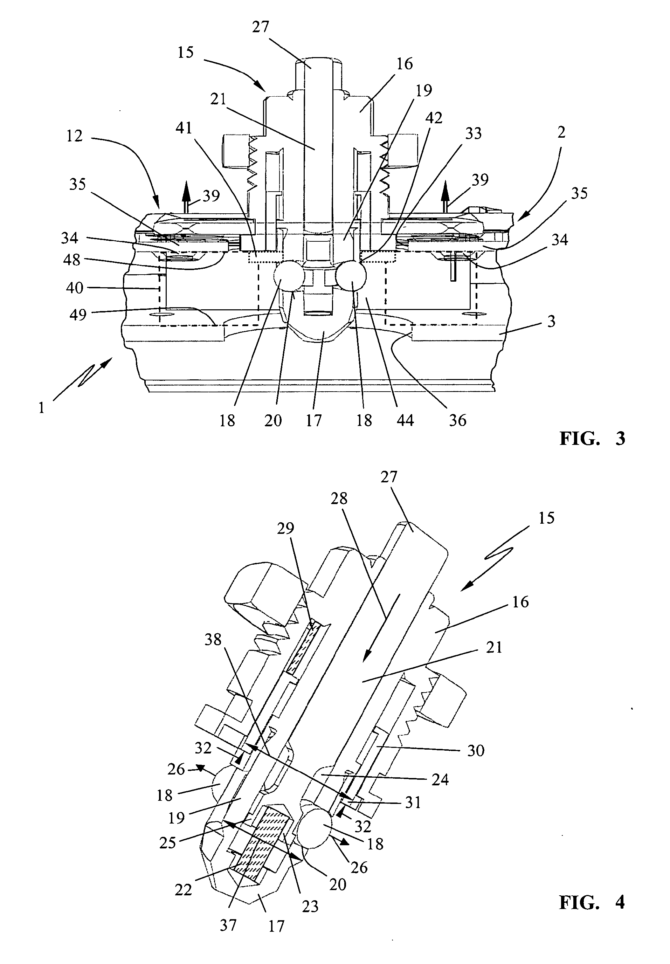

Das im Ausführungsbeispiel gezeigte mobile elektronische Gerät ist als Tablett-PC 1 ausgeführt, der ein Gehäuse 2 zur Aufnahme einer Hauptplatine 3 (Fig. 3) aufweist, auf der computertypische Bauteile wie ein Prozessor, ein Arbeitsspeicher und/oder ein Speichervolumen angeordnet sind. Als Anzeigeeinheit 4 ist ein vorzugsweise berührungsempfindlicher Bildschirm (Touchscreen) vorgesehen, der zugleich als Eingabeeinheit 5 genutzt werden kann. Es kann zweckmäßig sein, im Randbereich der Anzeigeeinheit 4 bzw. des Bildschirms Funktionstasten 6, einen Ausschalter 7 sowie Kontrollleuchten 8 anzuordnen. Das mobile, tragbare Gerät 1 wird aus einer gehäuseinternen Stromquelle gespeist, die als Batterie, bevorzugt als Akku 9 ausgebildet sein kann. Wie Fig. 1 zeigt, sind parallel zu den Längsseiten 10, 11 je ein Akkupack 9 angeordnet, die sich bevorzugt im Wesentlichen über die gesamte Breite B des Gerätes 1 erstrecken.

Zur Halterung des mobilen elektronischen Gerätes, nämlich des gezeigten Tablett-PCs 1, ist in einer Wand 12 des Gehäuses 2 eine Aufnahme 13 für einen Schnellverschluss 14 ausgebildet, der in einer bevorzugten Ausführungsform etwa zentral in der Rückseite 12 liegt. Im gezeigten Ausführungsbeispiel ist der Schnellverschluss 14 ein Kugelrastverschluss 15, der in den Fig. 3 und 4 im Detail gezeigt ist.

Der Kugelrastverschluss 15 besteht im Wesentlichen aus einem zentralen, zylinderförmigen Grundgehäuse 16, welches an seinem unteren Ende 17 topfförmig geschlossen ist. Oberhalb des unteren Endes 17 sind Rastkugeln 18 in Öffnungen 20 der Zylinderwand 19 angeordnet, wobei der Durchmesser einer Rastkugel 18 größer ist, als der Öffnungsdurchmesser einer Öffnung 20. Die im Innenraum des Grundgehäuses 16 angeordneten Rastkugeln 18 können somit die Öffnungen 20 nicht passieren.

Die Lage der Rastkugeln 18 wird durch einen zentralen Zylinderstift 21 bestimmt, der mit Abstand zu seinem unteren, im Grundgehäuse 16 liegenden Ende 23 eine umlaufende Ringnut 24 zeigt. Das Ende 23 zeigt einen Umfangsrand 25, der die Rastkugeln 18 in Pfeilrichtung 26 nach außen drückt. Die Abmessungen sind so getroffen, dass die Rastkugeln 18 durch den Umfangsrand 25 auf Anschlag fest in den Öffnungen 20 gehalten sind, wobei der Zylinderstift 21 durch die Rastkugeln zugleich derart gehalten ist, dass er aus dem Grundgehäuse 16 nicht austreten kann. Diese in Fig. 4 gezeigte Verriegelungsstellung wird durch eine Feder 22 stabilisiert, die zwischen dem Boden des Endes 17 des Grundgehäuses 16 und dem Ende 23 des Zylinderstiftes 21 angeordnet ist. Das andere, freie Ende 27 des Zylinderstiftes 21 ragt aus dem Grundgehäuse 16 heraus.

Wird der Zylinderstift 21 gegen die Kraft der Feder 22 in Pfeilrichtung 28 niedergedrückt, so können die Rastkugeln 18 in die Ringnut 24 zurückweichen, so dass sie nicht weiter über den Durchmesser 37 des Außenumfangs des zylindrischen Grundgehäuses 16 vorstehen. Die Rastkugeln 18 liegen in ihrer Freigabestellung.

Das zylindrische Grundgehäuse 16 ist ferner von einer Schalthülse 30 umgeben, die durch eine Feder 29 in Richtung auf das untere Ende 17 des Grundgehäuses 16 kraftbeaufschlagt ist. Die Schalthülse 30 kann mit ihrem unteren Ende 31 an den in Raststellung liegenden Rastkugeln 18 anliegen. Wird der Zylinderstift 21 in Pfeilrichtung 28 nach unten gedrückt, werden die Rastkugeln 18 aufgrund der federbelasteten Schalthülse 30 radial nach innen in die Ringnut 24 ausweichen, so dass die Rastkugeln 18 zwangsweise in ihre Freigabestellung verschoben werden. Die Schalthülse 30 überfährt die Kugeln 18 so weit, dass diese im Wesentlichen über die Hälfte ihres Umfangs innerhalb der Schalthülse 30 liegen. Wird der Zylinderstift 21 losgelassen, versucht die Feder 22 den Zylinderstift 21 entgegen Pfeilrichtung 28 nach oben zu verschieben und die Kugeln 18 radial nach außen zu stellen. Die Stellbewegung ist aufgrund der Schalthülse 30, die die Rastkugeln 18 überdeckt, blockiert.

Wird die Schalthülse 30 durch eine auf ihr Ende 31 wirkende Kraft in Pfeilrichtung 32 axial verschoben, werden die Rastkugeln 18 aus der Schalthülse 30 austreten und aufgrund des entgegen Pfeilrichtung 28 federbeaufschlagten Zylinderstiftes 21 und dessen Umfangswand 25 radial nach außen in ihre Verriegelungsstellung verschoben. Der Kugelrastverschluss 15 wird somit durch axiales Verschieben der Schalthülse 30 in Pfeilrichtung 32 in die Raststellung und durch Niederdrücken des Zylinderstiftes 21 in Pfeilrichtung 28 in die Freigabestellung geschaltet.

Der Kugelrastverschluss 15 arbeitet vorzugsweise mit einem Riegelblock 40 zusammen, der im Gehäuse 2 des mobilen elektronischen Gerätes 1 montiert ist und über eine zentrale Öffnung 33 in der Bodenplatte 35 des Gehäuses 2 zugänglich ist. Der Riegelblock 40 kann auf der Hauptplatine 3 zur Lagefixierung befestigt sein; kraftübertragend ist der Riegelblock 40 mit Befestigungen 34 der Bodenplatte 35 der Rückseite 12 verbunden, so dass die mechanischen Kräfte vom Gehäuse 2 selbst aufgenommen werden. Die Hauptplatine 3 bleibt von Tragkräften weitgehend frei.

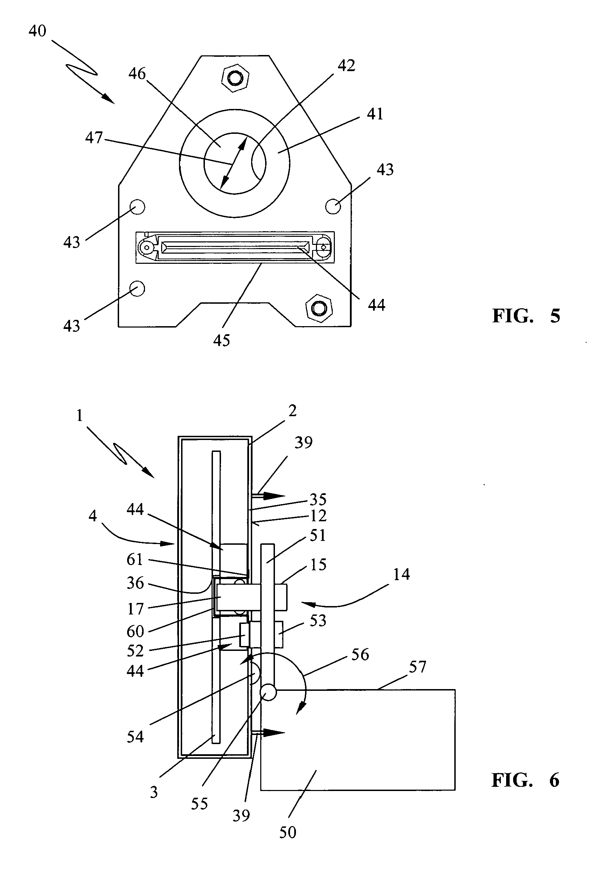

Wie Fig. 5 zeigt, ist im Riegelblock 40 eine Riegelplatte 41 festgelegt, vorzugsweise eingegossen, wobei die Riegelplatte 41 im gezeigten Ausführungsbeispiel eine innere, umlaufende Riegelkante 42 aufweist. Zum Festlegen des Riegelblocks 40 mit der Bodenplatte 35 des Gehäuses 2 sind im Riegelblock 40 vorzugsweise Gewindeeinsätze 43 vorgesehen. Es kann auch zweckmäßig sein, die Riegelplatte 41 unmittelbar mit der Bodenplatte 35 zu verbinden oder in diese einzugießen. Die Riegelplatte 41 besteht aus Stahl, insbesondere gehärtetem Stahl, um einen festen mechanischen Verbund mit dem Kugelrastverschluss 15 einzugehen.

Im Riegelblock 40 kann ferner der Steckanschluss 44 vorgesehen sein, der unmittelbar auf der Hauptplatine 3 festgelegt ist. Um den Steckanschluss 44 frei von Tragkräften zu halten, liegt dieser mit allseitigem Abstand in einer Ausnehmung 45 des Riegelblocks 40.

In Fig. 3 ist der in das mobile elektronische Gerät 1 eingreifende Kugelrastverschluss 15 gezeigt, der gehäusefest an einem Tragarm 51 einer Dockingstation 50 montiert ist (Fig. 6). Um eine Kollision des in das Gehäuse 2 des mobilen Gerätes 1 einragenden Endes 17 des Grundgehäuses 16 des Kugelrastverschlusses 15 mit der Hauptplatine 3 zu vermeiden, ist vorgesehen, in der Hauptplatine 3 eine Öffnung 36 auszubilden, in welche das freie Ende 17 einragen kann. Da das Gehäuse 2 zur Aufnahme des etwa zentral eingreifenden Kugelrastverschlusses 15 in der Rückseite 12 eine Öffnung 33 aufweisen muss, wird zur Abdichtung des Gehäuses 2 eine Dichtkappe 60 (Fig. 6) in die Öffnung 33 eingesetzt, in die der Kugelrastverschluss 15 einragt. Die nach Art eines Fingerhuts ausgebildete Dichtkappe 60 liegt mit einem Dichtrand 61 abdichtend an der Bodenplatte 35 an. Der Innendurchmesser der fingerhutartigen Dichtkappe ist größer als der Innendurchmesser 47 der Riegelkante 42, so dass der in das Gehäuse 2 einragende Abschnitt des Kugelrastverschlusses 15 mit geringem Spiel umgeben ist. Die Funktion des Schnellverschlusses 14 wird durch die topfartige Dichtkappe 60 nicht behindert.

Zum Aufrasten des mobilen Gerätes 1 auf den Kugelrastverschluss 15 der Dockingstation 50 wird das Ende 17 des Grundgehäuses 16 in die Öffnung 33 sowie die zentrale Öffnung 46 der Riegelplatte 41 eingefädelt. Der Innendurchmesser 47 der Öffnung 46 ist dabei geringfügig größer als der Außendurchmesser 37 des einragenden Endes 17 des Grundgehäuses 16. Der Innendurchmesser 47 ist aber kleiner als der Außendurchmesser 38 der Schalthülse 30, so dass beim Aufsetzen des Gehäuses 2 auf den Kugelrastverschluss 15 die Riegelplatte 41 an dem Ende 31 der Schalthülse 30 anstößt. Durch leichten Druck auf das Gehäuse 2 weicht die Schalthülse 30 in Pfeilrichtung 32 zurück, so dass die Rastkugeln 18 radial aus den Öffnungen 20 heraustreten können und die Rastkante 42 der Riegelplatte 41 untergreifen. Das Gehäuse 2 bzw. das mobile elektronische Gerät 1 ist auf dem etwa zentralen Kugelrastverschluss 15 der Dockingstation 50 mechanisch fest gehalten.

Das Aufsetzen des Gehäuses 2 auf den Kugelrastverschluss 15 erfolgt in Pfeilrichtung 39 (Fig. 3), die der Steckrichtung des Steckanschlusses 44 entspricht. Mit dem Aufsetzen des Gehäuses 2 auf den Kugelrastverschluss 15 wird somit gleichzeitig der Steckanschluss 44 zusammengesteckt, so dass die gewünschte elektrische Verbindung des mobilen elektronischen Gerätes 1 mit der Dockingstation 50 hergestellt ist.

Um einen Schmutzeintritt über die Öffnung 33 in der Bodenplatte 35 des Gehäuses 2 zu vermeiden, ist die Dichtkappe 60 vorgesehen; alternativ oder zusätzlich kann zwischen der Stirnseite 49 des Riegelblocks 40 und der Hauptplatine 3 sowie zwischen der Stirnseite 48 des Riegelblocks 40 und der Bodenplatte 35 jeweils eine Dichtung angeordnet werden. Da der Riegelblock 40 die Riegelplatte 41 und den auf der Hauptplatine 3 festgelegten Steckanschluss 44 vollständig umgibt, sind Dichtungen zweckmäßig, die im Wesentlichen die gesamte Stirnfläche 48, 49 des Riegelblocks 40 abdecken. Auch derartige Dichtungen gewährleisten eine vollständige Abdichtung der Riegelaufnahme nach außen.

Zum Lösen des Gerätes 1 von dem Tragarm 51 der Dockingstation 50 ist vom Benutzer lediglich der Zylinderstift 21 niederzudrücken. Die Rastkugeln 18 können in die Ringnut 24 zurückweichen und geben die Riegelplatte 41 frei. Das Gerät 1 kann entgegen Pfeilrichtung 39 abgenommen werden, wobei gleichzeitig der Steckanschluss 44 gelöst wird.

Wie Fig. 6 zeigt, kann die Dockingstation 50 einen Tragarm 51 für das mobile elektronische Gerät 1, im Ausführungsbeispiel ein Tablett-PC 1, aufweisen. Der Schnellverschluss 14, im Ausführungsbeispiel der beschriebene Kugelschnellverschluss 15, ist im Tragarm 51 fest montiert, so dass bei einem Aufschieben in Pfeilrichtung 39 auf den Kugelrastverschluss 15 des Tragarms 51 gleichzeitig der Steckanschluss 44 verbunden wird. Im gezeigten Ausführungsbeispiel nach Fig. 6 ist auf der Gehäuseseite ein Stecker 52 und auf der Seite des Tragarms 51 eine Buchse 53 vorgesehen. Zweckmäßig ist zwischen dem Gehäuse 2 und dem Tragarm 51 mit Abstand zum Schnellverschluss 14 ein Puffer aus Weichmaterial bzw. ein Anschlag 54 vorgesehen, der das Gehäuse 2 gegen den Tragarm 51 abstützt.

Wie in Fig. 6 gezeigt, ist der Tragarm 51 um eine Schwenkachse 55 in Pfeilrichtung 56 schwenkbar an der Dockingstation 50 gehalten, so dass die Anzeigeeinheit 4 den Arbeitsbedingungen vor Ort entsprechend eingestellt werden kann. Die Stellungen des Tragarms 51 sind zweckmäßig rastbar.

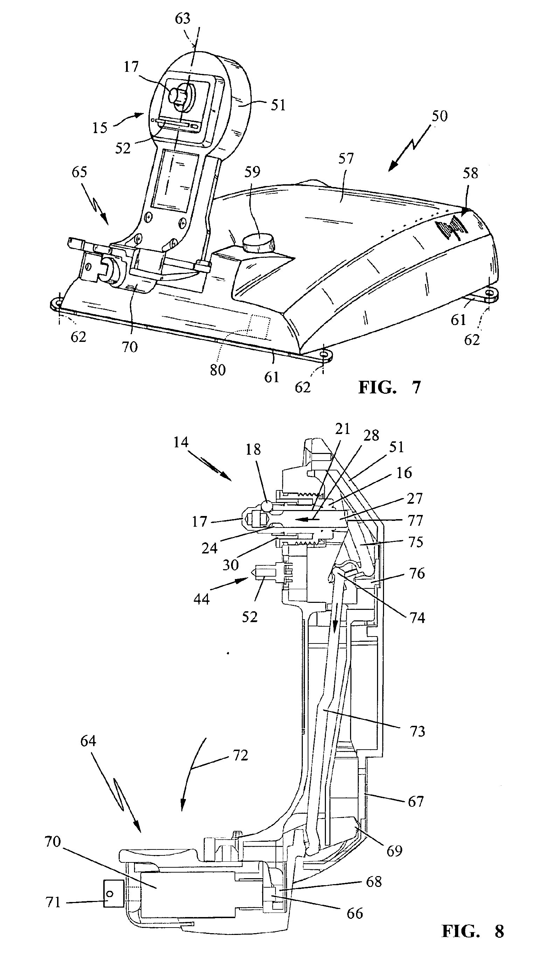

Wie Fig. 7 zeigt, besteht die Dockingstation 50 aus dem Gehäuse 57 mit dem vorteilhaft darin integrierten Computer sowie dem Access Point 58. Dieses Gehäuse 57 kann mittels Montageschienen 61 auf einer nicht dargestellten festen Unterlage montiert werden, wozu die Montageschienen 61 endseitig die Bodenplatte des Gehäuses 57 überragen und Befestigungsöffnungen 62 aufweisen. Am Gehäuse 57 ist - bevorzugt schwenkbar - der Tragarm 51 vorgesehen, der an seinem freien Ende den mechanischen Schnellverschluss 15 für das aufzusetzende mobile elektronische Gerät, nämlich den Tablett-PC 1, aufweist. Unterhalb des Schnellverschlusses 15 ist - quer zur Längsachse 63 des Tragarms 51 - der Steckanschluss 44 vorgesehen, der im gezeigten Ausführungsbeispiel als Stecker ausgebildet ist, aber auch eine Buchse sein kann. Der Stecker 52 bzw. die Buchse 53 greift in eine entsprechende Buchse 53 bzw. Stecker 52 auf der Rückseite des mobilen elektronischen Gerätes, nämlich den Tablett-PC 1, ein.

Der Tragarm 51 ist nach Drücken einer Entriegelungstaste 59 in Pfeilrichtung 56 (Fig. 6) verschwenkbar, wobei er in konstruktiv vorgegebenen Raststellungen entsprechend der gewünschten Kipplage des Tragarms 51 festlegbar ist.

Zur Sicherung des am Tragarm 51 festgelegten mobilen Gerätes ist am gehäusenahen Ende des Tragarms 42 eine Verriegelung 65 vorgesehen. Im gezeigten Ausführungsbeispiel ist diese als Schloss 70 ausgestaltet; andere Ausführungen können zweckmäßig sein.

Wie Figur 8 zeigt, kann das Schloss 70 mit dem Schnellverschluss 15 derart zusammenwirken, dass in der Sperrstellung des Schlosses 70 die Verriegelung des Schnellverschlusses 14 blockiert ist und in der Öffnungsstellung des Schlosses 70 der Schnellverschluss 14 betätigbar ist. In Weiterbildung der Erfindung ist vorgesehen, dass das Schloss 70 eine Betätigungstaste 64 sperrt, über die der Schnellverschluss 14 ausgelöst wird. Wie Fig. 8 zeigt, greift ein Sperrriegel 66 des Schlosses 70 derart in eine Sperröffnung 68 am Grundkörper 67 des Tragarms 51 ein, dass die um den Schwenkpunkt 69 bewegbare Betätigungstaste 64 blockiert ist. Wird der Schlüssel 71 gedreht, weicht der Sperrriegel 66 zurück und die Betätigungstaste 64 kann in Pfeilrichtung 72 geschwenkt werden. Mit der Betätigungstaste 64 ist eine Zugstange 73 verbunden, deren anderes, distales Ende 74 auf einen Kipphebel 75 wirkt, der in einem Schwenklager 76 gehalten ist. Der Kipphebel 75 drückt aufgrund des Zugs an der Zugstange 73 mit einem Ende 77 auf den Zylinderstift 21 des Schnellverschlusses 14 und drückt diesen in Pfeilrichtung 28 in seine Freigabestellung. Das Gerät kann vom Tragarm abgenommen werden. Durch Aufsetzen des Gerätes 1 auf den Tragarm 51 wird der Zylinderstift 21 zurückgedrängt und verschwenkt den Kipphebel 75 in seine Ausgangsstellung zurück.

Es kann zweckmäßig sein, als Schloss 70 ein elektromagnetisches Schloss einzusetzen, das z. B. über einen manuell einzugebenden Code oder über einen Tag Leser mit einem RFID-Tag oder einer SMART-Card betrieben ist. Wird der richtige Code erkannt, öffnet in Abhängigkeit des Ausgangssignals eines Lesegerätes das elektromagnetische Schloss 70 den Sperrriegel 66, und der Benutzer kann die Betätigungstaste 64 zum Öffnen des Schnellverschlusses 14 verschwenken.

Das Lesegerät 80 zur Identifizierung des Benutzers kann im elektronischen Gerät selbst, nämlich dem Tablett-PC 1, oder im Gehäuse 57 der Dockingstation 50 integriert sein. Wird der Benutzer als berechtigter Benutzer identifiziert, erfolgt die elektromagnetische Betätigung des Schlosses 70 und damit die mechanische Freigabe des Gerätes.

Im Ausführungsbeispiel ist die Öffnung 33 zum Eingriff des Schnellverschlusses 14 auf der Rückseite 12 des Gehäuses 2 vorgesehen und der Kugelrastverschluss 15 an dem Tragarm 51 der Dockingstation 50 gehalten. Es kann auch vorteilhaft sein, den Schnellverschluss 14 selbst am Gehäuse 2 zu fixieren und die korrespondierende Aufnahmeöffnung 33 am Arm 51 der Dockingstation 50 vorzusehen.

## Patentansprüche

1. Mobiles elektronisches Gerät wie ein Computer, insbesondere ein Notebook, ein Laptop, ein Tablett-PC oder dgl., bestehend aus einem Gehäuse (2) und einer in dem Gehäuse (2) angeordneten Hauptplatine (3), auf der mindestens ein Prozessor und ein Arbeitsspeicher angeordnet ist, mit einer Anzeigeeinheit (4) und einer Eingabeeinheit (5), wobei das Gerät (1) gehäusefeste Anschlüsse (44) zum elektrischen Verbinden des Gerätes (1) mit einer insbesondere ortsfesten Dockingstation (50) aufweist,
**dadurch gekennzeichnet, dass** zwischen dem Gerät (1) und der Dockingstation (50) ein mechanischer Schnellverschluss (14) angeordnet ist, der an einer Wand (12) des Gehäuses (2) angreift und eine mechanisch feste Verbindung zwischen dem Gehäuse (2) des mobilen Gerätes (1) und der Dockingstation (50) herstellt.

2. Gerät nach Anspruch 1,
**dadurch gekennzeichnet, dass** das Gerät (1) mit nur einem einzigen Schnellverschluss (14) an der Dockingstation (50) gehalten ist.

3. Gerät nach Anspruch 1 oder 2,
**dadurch gekennzeichnet, dass** der Schnellverschluss (14) etwa zentral in eine Wand (12) des Gerätes (1), vorzugsweise in die Rückwand des Gehäuses (2) eingreift und insbesondere benachbart zu einem elektrischen Anschluss (44) liegt.

4. Gerät nach einem der Ansprüche 1 bis 3,
**dadurch gekennzeichnet, dass** der Schnellverschluss (14) ein Kugelrastverschluss (15) ist.

5. Gerät nach einem der Ansprüche 1 bis 4,
**dadurch gekennzeichnet, dass** dem Schnellverschluss (14) eine Riegelplatte (40) zugeordnet ist, die am Gehäuse (2) des mobilen Gerätes (1) festgelegt ist.

6. Gerät nach Anspruch 5,
**dadurch gekennzeichnet, dass** die Riegelplatte (41) aus Stahl, vorzugsweise aus gehärtetem Stahl besteht und eine innere Riegelkante (42) aufweist.

7. Gerät nach Anspruch 5 oder 6,
**dadurch gekennzeichnet, dass** die Riegelplatte (41) in einem Riegelblock (40) gehalten ist, der vorzugsweise innerhalb des Gehäuses (2) fixiert ist, insbesondere mit dem Gehäuse (2) mechanisch fest verbunden ist.

8. Gerät nach Anspruch 7,
**dadurch gekennzeichnet, dass** der Riegelblock (40) mit der Bodenplatte (35) des Gehäuses (2) fest verbunden, vorzugsweise verschraubt ist.

9. Gerät nach Anspruche 7 oder 8,
**dadurch gekennzeichnet, dass** der elektrische Anschluss (44) innerhalb des Riegelblocks (40) liegt, der den Anschluss (44) vorzugsweise mit Spiel umgibt.

10. Gerät nach Anspruch 9,
**dadurch gekennzeichnet, dass** der elektrische Anschluss (44) innerhalb der Kontur von Befestigungspunkten (43) des Riegelblocks (40) mit dem Gehäuse (2) liegt.

11. Gerät nach einem der Ansprüche 7 bis 10,
**dadurch gekennzeichnet, dass** auf einer Stirnseite (48, 49) des Riegelblocks (40) eine Dichtung angeordnet ist, die die Riegelplatte (41) und den elektrischen Anschluss (44) umgibt.

12. Gerät nach einem der Ansprüche 1 bis 11,
**dadurch gekennzeichnet, dass** eine im Gehäuse (2) ausgebildete Öffnung (33) zum Eingriff des Schnellverschlusses (14) mit einer fingerhutähnlichen Dichtkappe (60) versehen ist, die mit einem Dichtrand (61) vorzugsweise abdichtend an einer Wand (12) des Gehäuses (2) anliegt.

13. Gerät nach einem der Ansprüche 1 bis 12,
**dadurch gekennzeichnet, dass** die mechanisch feste Verbindung zwischen dem Gehäuse (2) des mobilen Gerätes (1) und der Dockingstation (50) durch ein mechanisches Schloss (70) gesichert ist.

14. Gerät nach Anspruch 13,
**dadurch gekennzeichnet, dass** das Schloss (70) mit dem mechanischen Schnellverschluss (14) zusammenwirkt.

15. Gerät nach Anspruch 13 oder 14,
**dadurch gekennzeichnet, dass** das Schloss (70) elektromagnetisch betätigt ist, insbesondere in Abhängigkeit vom Ausgangssignal eines Lesegerätes (80) für einen RFID-Tag, eine SMART-Card oder dgl. betätigt ist.
